# EUROPEAN PATENT SPECIFICATION

(11) **EP 0 855 366 B1**
(45) Date of publication and mention of the grant of the patent: **02.05.2001**
(21) Application number: 98100669.5
(22) Date of filing: 16.01.1998
(51) Int. Cl.: C01B 3/38

(54) **Synthesis gas production by steam reforming using catalyzed hardware**
Erzeugung eines Synthesegases durch Dampfreformierung unter Verwendung eines katalysierten Hardware
Production de gaz de synthèse par réformage à la vapeur utilisant un hardware catalysé

(30) Priority: 22.01.1997 US 35396 P
(43) Date of publication of application: 29.07.1998
(73) Proprietor: Haldor Topsoe A/S, 2800 Lyngby (DK)
(72) Inventor: Rostrup-Nielsen, Jens, 2830 Virum (DK); Christensen, Peter Seier, 2400 Copenhagen NV (DK); Hansen, Viggo Lucassen, 2700 Bronshoj (DK)
(74) Representative: Grünecker, Kinkeldey, Stockmair & Schwanhäusser Anwaltssozietät

(56) References cited:
- EP-A- 0 124 226
- EP-A- 0 437 059
- EP-A- 0 440 258
- US-A- 4 400 309
- PATENT ABSTRACTS OF JAPAN vol. 017, no. 551 (C-1117), 5 October 1993 & JP 05 155602 A (SEKIYU SANGYO KASSEIKA CENTER;OTHERS: 01), 22 June 1993,

## Description

The present invention is directed to the production of synthesis gas by steam reforming of a hydrocarbon feedstock in contact with catalyzed hardware.

The term catalyzed hardware is used for a catalyst system where a layer of catalyst is fixed on a surface of another material, e.g. metallic surfaces. The other material serves as the supporting structure giving strength to the system. This allows to design catalyst shapes which would not have sufficient mechanical strength in itself. The system herein consists of tubes on which a thin layer of reforming catalyst is placed on the inner wall.

Synthesis gas is produced from hydrocarbons by steam reforming by the reactions (1)-(3): ${\text{C}}_{\text{n}} {\text{H}}_{\text{m}} {\text{+ n H}}_{\text{2}} \text{O → n CO + (n +} \frac{\text{m}}{\text{2}} {\text{) H}}_{\text{2}} \text{(-ΔH} \frac{\text{o}}{\text{298}} \text{< 0)}$${\text{CO + H}}_{\text{2}} {\text{O ⇄ CO}}_{\text{2}} {\text{+ H}}_{\text{2}} \text{(-ΔH} \frac{\text{o}}{\text{298}} \text{= 41 kJ/mole)}$${\text{CH}}_{\text{4}} {\text{+ H}}_{\text{2}} {\text{O ⇄ CO + 3 H}}_{\text{2}} \text{(-ΔH} \frac{\text{o}}{\text{298}} \text{= -206 kJ/mole)}$

State of the art steam reforming technology makes use of reforming catalyst in the form of pellets of various sizes and shapes. The catalyst pellets are placed in fixed bed reactors (reformer tubes). The reforming reaction is endothermic. In conventional reformers, the necessary heat for the reaction is supplied from the environment outside the tubes usually by a combination of radiation and convection to the outer side of the reformer tube. The heat is transferred to the inner side of the tube by heat conduction through the tube wall, and is transferred to the gas phase by convection. Finally, the heat is transferred from the gas phase to the catalyst pellet by convection. The catalyst temperature can be more than 100°C lower than the inner tube wall temperature at the same axial position of the reformer tube.

Steam reforming of hydrocarbons in a bayonet tube steam reformer with heat supplied by indirect heat exchange with
a hot gas flowing on the outer tube shell side and hot product gas being withdrawn from tube side of the inner tube of the bayonet tube steam refomer is mentioned in EP-A-124226. Steam reforming catalyst is in this process supported on tube side of the inner tube of bayonet. It has been found that heat transport is more efficient when catalyzed hardware is used in the steam reforming process. The heat transport to the catalyst occurs by conduction from the inner tube wall. This is a much more efficient transport mechanism than the transport by convection via the gas phase. The result is that the temperatures of the inner tube wall and the catalyst are almost identical (the difference below 5°C). Furthermore, the tube thickness can be reduced, see below, which makes the temperature difference between the inner and outer side of the reformer tube smaller. It is hence possible to have both a higher catalyst temperature and a lower tube temperature, all other conditions being the same when replacing the conventional reformer tubes with catalyzed hardware tubes. A low outer tube wall temperature is desirable since it prolongs the lifetime of the tube. A high catalyst temperature is advantageous since the reaction rate increases with temperature and since the equilibrium of reaction (3) is shifted to the right hand side resulting in a better utilisation of the feed.

Accordingly, this invention provides a process for the preparation of hydrogen of carbon monoxide rich gas by steam reforming of a hydrocarbon feedstock in presence of a steam reforming catalyst supported as thin film on a tubular reactor, comprising steps of:
(a) optionally passing a process gas of prereformed hydrocarbon feedstock through a first tubular reactor with a thin film of steam reforming catalyst supported on walls of the reactor in heat conducting relationship with hot flue gas from a subsequent second tubular steam reforming reactor;
(b) passing effluent from the first tubular reactor to the subsequent second tubular reactor being provided with a thin film of the steam reforming catalyst and being heated by burning of fuel, thereby obtaining a partially steam reformed gas effluent and the hot flue gas;
(c) passing the effluent from the second reactor to a fixed bed steam reforming catalyst; and
(d) withdrawing from the fixed bed a product gas of the hydrogen and carbon monoxide rich gas.

Pressure drop in the catalyzed reformer tube is much lower than in the conventional case for the same tube diameter. This enables the use of reactor tubes with a smaller diameter and still maintaining an acceptable pressure drop. Smaller tube diameter results in an increased tube lifetime, tolerates higher temperatures and reduces the tube material consumption.

Finally, the catalyst amount is reduced when using catalyzed hardware reformer tubes compared to the conventional reformer with a fixed bed of reforming catalyst.

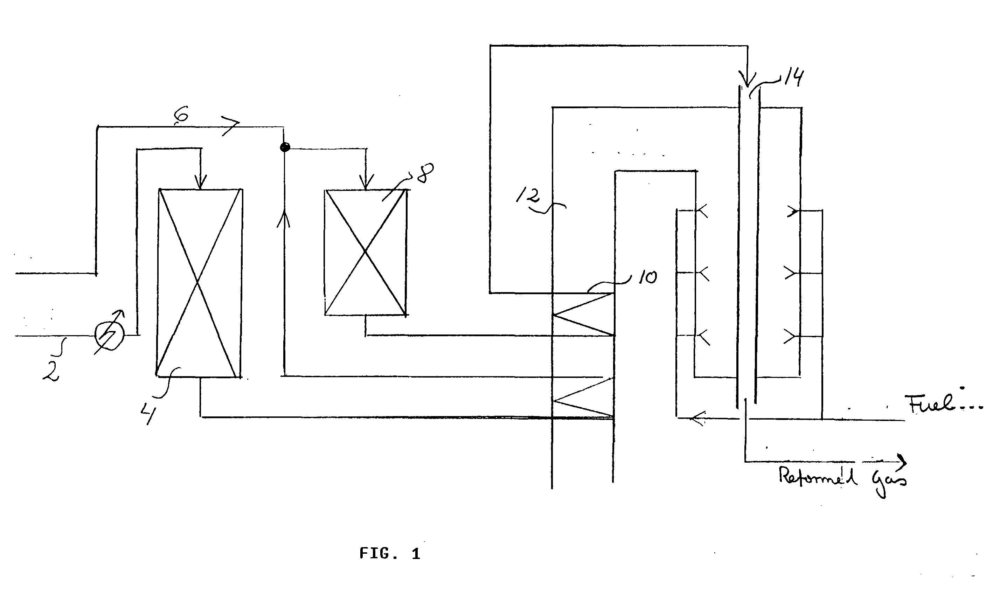

Fig. 1 shows the front-end of a plant producing syngas. Feed **2** is preheated, desulphurized in unit **4**, mixed with process steam **6**, and further heated before entering an adiabatic prereformer **8**. The effluent stream from prereformer **8** is further heated in loop arranged in flue gas channel **12** and send to the tubular reformer **14**, where conversion of methane to hydrogen, carbon monoxide, and carbon dioxide occurs. The processing of effluent gas downstream from the tubular reformer depends on the use of the product.

Catalyzed hardware can be used in two of the units shown in Fig. 1:
1. In the preheater coil **10** for heating the prereformer effluent gas before entering the tubular reformer **14.**
2. In the tubular reformer **14**.

Below is presented the results obtained for the plant in Fig. 1 when catalyzed hardware is used in the above two units. The catalyst used for the catalyzed hardware is the R-67R nickel steam reforming catalyst available from Haldor Topsoe A/S. The results are compared with the conventional case.

The purpose of the preheater coil is to use the heat content in the flue gas for preheating of the process gas before it enters the tubular reformer. The flue gas is used for preheating of process gas and for preheating of the combustion air for the tubular reformer (not shown in Fig. 1). However, the heat content of the flue gas is larger than what can be used for these purposes and the remaining heat is used for steam production. It will be an advantage, if a larger amount of the heat content in the flue gas can be transferred to the process gas. This will reduce the necessary amount of fuel in the tubular reformer, and it will reduce the size of the reformer since a smaller amount of heat is to be transferred in the unit.

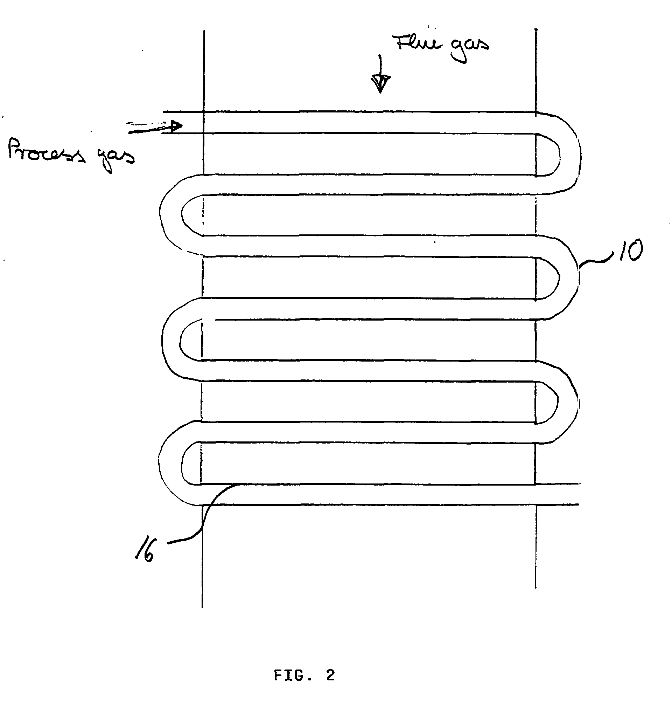

The conventional preheater is limited by the risk of carbon formation by decomposition of methane. This sets an upper limit for the tube wall temperature, which can be accepted. Fixing a layer of catalyzed hardware on the inner tube wall **6** of the preheater coil **10** (as shown in Fig. 2) results in a decrease of both the tube wall temperature and the process gas temperature. This enables the transfer of a higher duty in the coil without having a higher tube temperature.

The preheater coil used in the calculation consists of **8** tubes in which the process gas flow inside the tubes. The flue gas flows on the outer side. The flow pattern is cross flow/co-current. Fig. 2 shows the layout for one tube. The two cases with and without catalyzed hardware are summarised in Table 1. It is apparent that the transferred duty (heat energy) is 49% higher in the catalyzed hardware case compared to the conventional case. The catalyst layer thickness in the catalyst hardware case is 1.0 mm.

**Table 1**

| | Conventional case | Catalyzed hardware case |
|---|---|---|
| Number of tubes | 8 | 8 |
| Total effective tube length | 51.6 m | 76.2 m |
| Flue gas in/out temperature | 1057°C/964°C | 1057°C/912°C |
| Proces gas in/out temperature | 512°C/650°C | 512°C/631°C |
| Methane conversion | 0% | 8.7% |
| Transferred duty | 9.69∗10⁶ kcal/h | 1.44∗10⁷ kcal/h |

The effective tube length is the length of the tube inside the flue gas channel.

The conventional tubular reformer consists of a number of tubes which is filled with catalyst pellets. The process gas flows inside the tubes. The tubes are placed in a furnace which is heated by combustion of a fuel.

In the catalyzed hardware case the catalyst pellet filled tubes are replaced with a number of tubes with a layer of catalyzed hardware on the inner tube wall. The catalyst layer thickness is 0.25 mm. An additional adiabatic reforming fixed bed reactor is placed downstream from the tubular reactor since the conversion of methane in the catalyzed hardware tubular reformer is inferior to the conventional case. This reactor is called post reformer. The catalyst used in the post reformer is the RKS-2 nickel steam reforming catalyst available from Haldor Topsoe A/S.

The two cases are summarised below in Table 2. It is seen that catalyst consumption is decreased by a factor 11.5, and that material consumption for the tubes in the tubular reformer is decreased 24% in the catalyzed hardware case compared to the conventional case.

**Table 2**

| | Conventional case | Catalyzed hardware reformer | Catalyzed hardware case + post reformer |
|---|---|---|---|
| Number of tubes | 276 | 187 | |
| Tube length | 13 m | 55 m | |
| Catalyst consumption | 31.0 t | 0.63 t | 2.70 t |
| Tube material consumption for tubular reformer | 153.6 t | 116.0 t | |
| Methane conversion | 89.0 % | 80.7 % | 90.2 % |

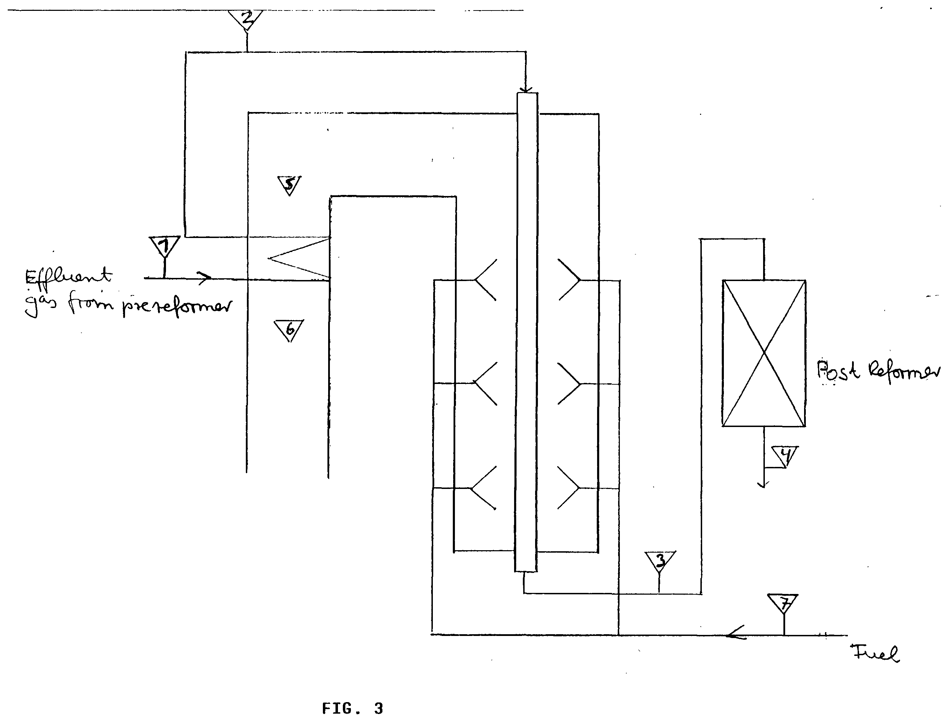

A flow scheme of a process according to the invention is shown in Fig. 3. The numbers in the triangles refer to the table below in which the overall figures for the process are compared. The fuel consumption is decreased by 7.4% in the catalyzed hardware case compared to the conventional case.

**Table 3**

| Position | | Conventional case | Catalysed hardware case |
|---|---|---|---|
| 1 | T (°C) | 512 | 512 |
| | P (kg/cm² g) | 28.5 | 28.5 |
| | Total dry flow (Nm³/h) | 57851 | 57851 |
| | Total flow (Nm³/h) | 143168 | 143168 |
| | Composition (dry mole %) | 23.78 | 23.78 |
| | H₂ | 0.74 | 0.74 |
| | CO | 21.14 | 21.14 |
| | CO₂ | 54.34 | 54.34 |
| | CH₄ | | |
| 2 | T (°C) | 650 | 631 |
| | P (kg/cm² g) | 27.5 | 27.4 |
| | Total dry flow (Nm³/h) | 57851 | 67397 |
| | Total flow (Nm³/h) | 143168 | 148720 |
| | Composition (dry mole %) | 23.78 | 34.58 |
| | H₂ | 0.74 | 2.67 |
| | CO | 21.14 | 20.16 |
| | CO₂ | 54.34 | 42.59 |
| | CH₄ | | |
| 3 | T (°C) | 925 | 1015 |
| | P (kg/cm² g) | 24.1 | 26.0 |
| | Total dry flow (Nm³/h) | 141533 | 132653 |
| | Total flow (Nm³/h) | 199121 | 194106 |
| | Composition (dry mole %) | 68.85 | 66.76 |
| | H₂ | 20.24 | 20.42 |
| | CO | 8.47 | 8.24 |
| | CO₂ | 2.44 | 4.57 |
| | CH₄ | | |
| 4 | T (°C) | No post reformer | 930 |
| | P (kg/cm² g) | in this case | 24.4 |
| | Total dry flow (Nm³/h) | | 142580 |
| | Total flow (Nm³/h) | | 200003 |
| | Composition (dry mole %) | | 69.08 |
| | H₂ | | 20.35 |
| | CO | | 8.40 |
| | CO₂ | | 2.17 |
| | CH₄ | | |
| 5 | T (°C) | 1057 | 1057 |
| | Total flow (Nm³/h) | 244672 | 234677 |
| 6 | T (°C) | 964 | 912 |
| 7 | Total flow (Nm³/h) | 9524 | 8820 |

## Claims

1. Process for the preparation of hydrogen and carbon monoxide rich synthesis gas by steam reforming of a hydrocarbon feedstock in presence of a steam reforming catalyst supported as thin film on a tubular reactor, comprising steps of
(a) passing a process gas of prereformed hydrocarbon through a tubular reactor being provided with a thin film of steam reforming catalyst and being heated by burning of fuel, thereby obtaining a partially steam reformed gas effluent and a hot flue gas;
(b) passing the effluent from the tubular reactor to a fixed bed steam reforming catalyst; and
(c) withdrawing from the fixed bed a product gas of the hydrogen and carbon monoxide rich synthesis gas.

2. Process of claim 1 comprising the further step of prior to step (a) passing the process gas of prereformed hydrocarbon through a tubular reactor with a thin film of steam reforming catalyst supported on wall of the reactor in heat conducting relationship with the hot flue gas from the subsequent process step (a).

3. Process of claim 1, wherein the fixed bed steam reforming catalyst is operated at adiabatic condition.

4. Process of claim 1, wherein the steam reforming catalyst comprises nickel and/or ruthenium.

## Patentansprüche

1. Verfahren zum Herstellen von wasserstoff- und kohlenmonoxidreichem Synthesegas durch Dampfreformierung eines Kohlenwasserstoff-Einsatzmaterials in Gegenwart eines Dampfreformierungskatalysators, der als dünner Film auf einem Rohrreaktor aufgetragen ist, umfassend die Schritte
(a) Leiten eines Prozessgases aus einem vorreformierten Kohlenwasserstoff durch einen Rohrreaktor, der mit einem dünnen Film eines Dampfreformierungskatalysators versehen ist und durch Verbrennen von Brennstoff erwärmt wird, wodurch ein teilweise dampfreformiertes Gas als abfließendes Medium und ein heißes Rauchgas erhalten werden;
(b) Leiten des abfließenden Mediums aus dem Rohrreaktor zu einem Festbett-Dampfreformierungskatalysator; und
(c) Entnehmen eines Produktgases aus dem wasserstoff- und kohlenmonoxidreichen Synthesegas von dem Festbett.

2. Verfahren nach Anspruch 1, umfassend den weiteren Schritt, dass vor Schritt (a) das Prozessgas aus einem vorreformierten Kohlenwasserstoff durch einen Rohrreaktor mit einem dünnen Film eines Dampfreformierungskatalysators geleitet wird, der auf einer Wand des Reaktors in wärmeleitender Beziehung zu dem heißen Rauchgas von dem nachfolgenden Verfahrensschritt (a) aufgetragen ist.

3. Verfahren nach Anspruch 1, wobei der Festbett-Dampfreformierungskatalysator unter adiabatischen Bedingungen betrieben wird.

4. Verfahren nach Anspruch 1, wobei der Dampfreformierungskatalysator Nickel und/oder Ruthenium umfasst.

## Revendications

1. Procédé pour la préparation de gaz de synthèse riche en hydrogène et monoxyde de carbone par reformage à la vapeur d'une charge d'alimentation hydrocarbonée en présence d'un catalyseur de reformage à la vapeur supporté sous la forme d'un film mince sur un réacteur tubulaire, comprenant les étapes consistant
(a) à faire passer un gaz de traitement d'hydrocarbure préreformé à travers un réacteur tubulaire qui est doté d'un film mince de catalyseur de reformage à la vapeur et qui est chauffé en brûlant un combustible, ce qui fournit un effluent gazeux partiellement reformé à la vapeur et un gaz de carneau chaud ;
(b) à faire passer l'effluent du réacteur tubulaire à un catalyseur de reformage à la vapeur à lit fixe ; et
(c) à soutirer du lit fixe un produit gazeux de gaz de synthèse riche en hydrogène et monoxyde de carbone.

2. Procédé selon la revendication 1, comprenant l'étape supplémentaire, avant l'étape (a), consistant à faire passer le gaz de traitement d'hydrocarbure préreformé à travers un réacteur tubulaire avec un film mince de catalyseur de reformage à la vapeur supporté sur la paroi du réacteur dans une relation thermoconductrice avec le gaz de carneau chaud de l'étape de procédé (a) subséquente.

3. Procédé selon la revendication 1, dans lequel le catalyseur de reformage à la vapeur à lit fixe fonctionne dans une condition adiabatique.

4. Procédé selon la revendication 1, dans lequel le catalyseur de reformage à la vapeur comprend du nickel et/ou du ruthénium.
